# EUROPEAN PATENT SPECIFICATION

(11) **EP 0 686 551 B1**
(45) Date of publication and mention of the grant of the patent: **14.01.1998**
(21) Application number: 95107984.7
(22) Date of filing: 24.05.1995
(51) Int. Cl.: B62M 23/02, B62J 17/00, B62K 19/48

(54) **Body cover structure in motor-assisted bicycle**
Verkleidung von Fahrrädern mit Hilfsmotor
Carénage de bicyclette avec moteur auxiliaire

(30) Priority: 11.06.1994 JP 152724/94
(43) Date of publication of application: 13.12.1995
(73) Proprietor: HONDA GIKEN KOGYO KABUSHIKI KAISHA, Minato-ku, Tokyo (JP)
(72) Inventor: Iseno, Mitsuru, c/o K.K. Honda Gijutsu Kenkyusho, Wako-shi, Saitama (JP); Fujiwara, Masaki, c/o K.K. Honda Gijutsu Kenkyusho, Wako-shi, Saitama (JP); Takeuchi, Tsutomu, c/o K.K.Honda Gijutsu Kenkyusho, Wako-shi, Saitama (JP)
(74) Representative: Liska, Horst, Dr.-Ing.

(56) References cited:
- GB-A- 2 224 253
- US-A- 4 541 500
- US-A- 5 226 501

## Description

### Field of the Invention

The present invention relates to a motor-assisted bicycle having a battery and a motor to use motive power of the motor for assisting man power propelling the bicycle, and more particularly to a body cover structure in the motor-assisted bicycle.

### Prior Art

In a motor-assisted bicycle, a motor is provided in a power transmitting system for transmitting a depression force applied to pedals to a wheel, and an output from the motor is controlled according to the depression force applied to the pedals. Further, a battery for supplying electric power to the motor is provided.

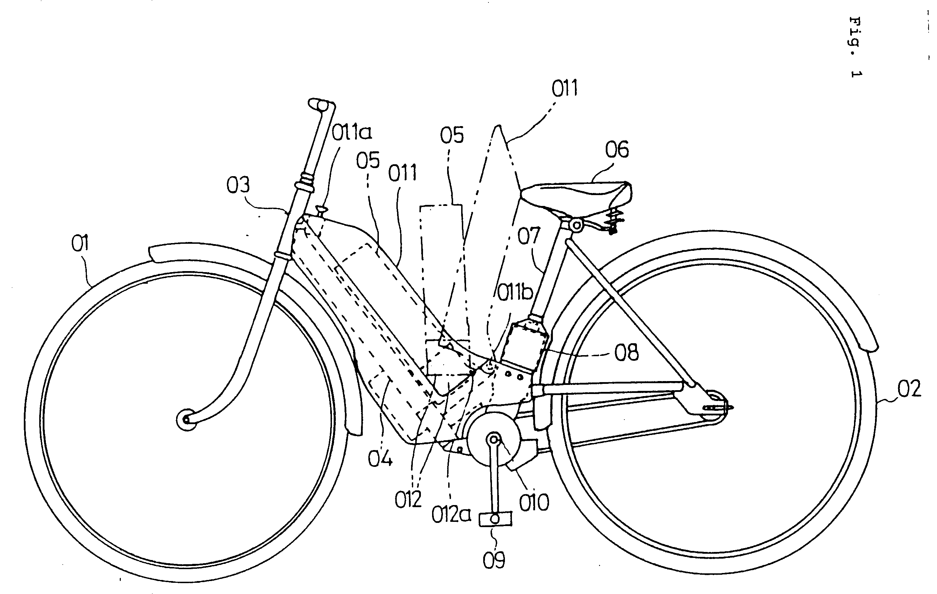

Fig. 1 is a side view of a motor-assisted bicycle described in Japanese Patent Laid-open No. 5-319104, according to the preamble of claim 1.

A main frame having a V-shape as viewed in side elevation is provided between a front wheel 01 and a rear wheel 02. A down tube 04 of the main frame extends rearward and downward from a head pipe 03. An elongated battery case 05 is provided along the down tube 04. A seat tube 07 of the main frame extends rearward and upward from the lower end of the down tube 04 toward a seat 06. A motor 08 is provided on the seat tube 07. A pedal crank 09 is located at a V-shaped lowermost portion of the main frame. There is provided at the V-shaped lowermost portion a gear mechanism for reducing a driving force of the motor 08 in speed and transmitting it to a crankshaft 010 supporting the pedal crank 09.

The battery case 05 is covered with an exterior cover 011. The exterior cover 011 can be opened by opening a lock device 011a provided at the front end of the exterior cover 011 and then upward pivoting the exterior cover 011 about a pivot shaft 011b provided at the rear upper end of the exterior cover 011.

The battery case 05 is clamped to a body cover, and a support box 012 is detachably provided at the lower end of the battery case 05. The support box 012 can be upward pivoted together with the battery case 05 about a pivot shaft 012a. In Fig. 1, the upward pivoted condition of the battery case 05 and the support box 012 is shown by a phantom line.

In this condition, the battery case 05 can be detached from the support box 012, thus being removed from a vehicle body.

### Problem to be Solved by the Invention

In this manner, the motor-assisted bicycle in the prior art mentioned above has a body cover structure such that the battery case 05 is fixedly supported to the vehicle body by clamping the battery case 05 to the body cover, engaging the battery case 05 with the support box 012, and covering the battery case 05 and the support box 012 with the exterior cover 011.

Accordingly, the body cover structure is complicated with many parts, and the battery case 05 cannot be easily attached and detached.

It is accordingly an object of the present invention to provide a body cover structure in a motor-assisted bicycle which is small in number of parts and simple to support a battery case and can facilitate attaching and detaching of the battery case.

### Means and Operation of Solving the Problem.

In a motor-assisted bicycle having a battery and a motor to be driven by electric power of the battery and generate motive power assisting man power, the motor-assisted bicycle having a V-shaped main frame comprising a down tube extending rearward and downward from a head pipe and a seat tube extending rearward and upward from a lower end of the down tube toward a seat; there is provided a body cover structure comprising side covers for surrounding the down tube, the side covers having inclined upper surfaces for supporting a lower surface of an elongated battery case; and a center cover for covering a front surface of the seat tube, the center cover having a lower portion formed with a recess defined by bottom walls and opposed side walls formed at right and left side edges of the bottom walls; wherein a rear portion of the battery case is fittedly supported by the recess.

According to the present invention, the lower surface of the battery case is supported by the side covers, and the rear end portion of the battery case is fittedly supported by the recess formed at the lower portion of the center cover as being guided by the recess. Accordingly, the battery case can be securely supported by the body cover with a simple structure, and the body cover can be easily assembled because of a small number of parts. Furthermore, the battery case can be simply attached to and detached from the body cover.

Electrical connection terminals on the vehicle body side to be connected to the battery stored in the battery case may be located at the recess formed at the lower portion of the center cover. That is, the electrical connection terminals may be located at the recess where the rear portion of the battery case is guided and positioned in mounting the battery case. Accordingly, the electrical connection between the battery case side and the vehicle body side can be always reliably obtained.

The side covers may be formed as a pair of substantially symmetrical left and right side covers each having a V-shape extending along the main frame in such a manner that the rear half portion of each side cover covers the rear surface of the seat tube. With this structure, the body cover for supporting the battery case can be constructed by the three parts, i.e., the two side covers and the center cover. Thus, the body cover can be made simple in structure and can be simply assembled.

### BRIEF DESCRIPTION OF THE DRAWINGS

Fig. 1 is a general side view of a motor-assisted bicycle in the prior art.

Fig. 2 is a general side view of a motor-assisted bicycle according to a preferred embodiment of the present invention.

Fig. 3 is an exploded perspective view of a body cover of the motor-assisted bicycle.

Fig. 4 is a side view of side covers.

Fig. 5 is a fragmentary top plan view of the side covers.

Fig. 6 is a cross section taken along the line VI-VI in Figs. 4 and 5.

Fig. 7 is a cross section taken along the line VII-VII in Figs. 4 and 5.

Fig. 8 is a cross section taken along the line VIII-VIII in Fig. 4.

Fig. 9 is a side view of a center cover.

Fig. 10 is a view taken in the direction of the arrow X in Fig. 9.

Fig. 11 is a side view of a body cover constructed by assembling the side covers and the center cover and a battery case removed from the body cover.

Fig. 12 is a side view of the body cover and the battery case mounted thereon.

Fig. 13 is a view taken in the direction of the arrow XIII in Fig. 12.

Fig. 14 is a top plan view of a discharging connector.

Fig. 15 is a rear elevation of the discharging connector.

Fig. 16 is a cross section taken along the line XVI-XVI in Fig. 15.

Fig. 17 is a top plan view of a connector mounted on the body cover.

Fig. 18 is a rear elevation of the connector.

Fig. 19 is a cross section taken along the line XIX-XIX in Fig. 18.

Fig. 20 is a sectional view of the rear portion of the battery case and the lower portion of the center cover.

Fig. 21 is a top plan view of a body of the battery case at its rear portion.

Fig. 22 is a partially cutaway, side view of the front portion of the battery case in the vicinity of a head pipe.

### Preferred Embodiment

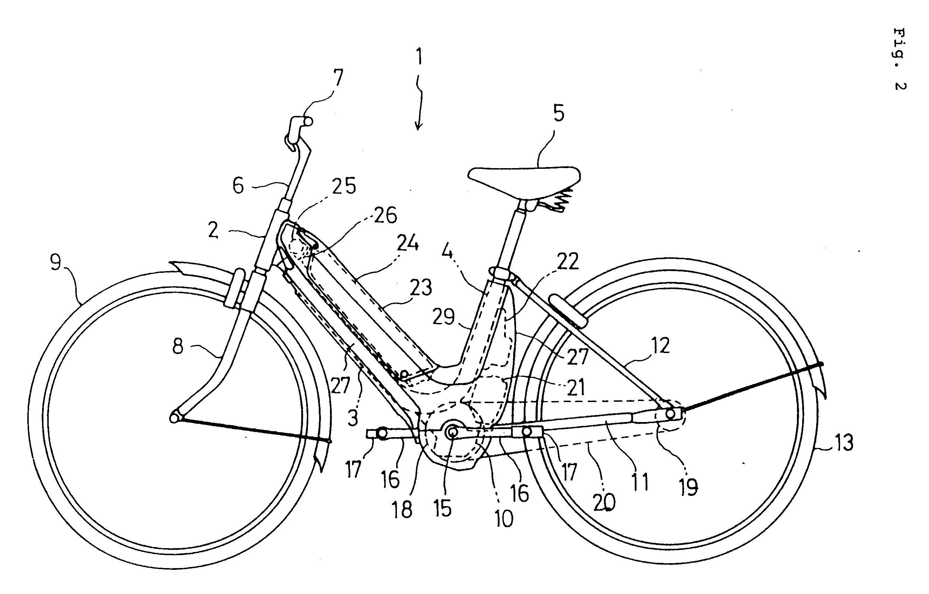

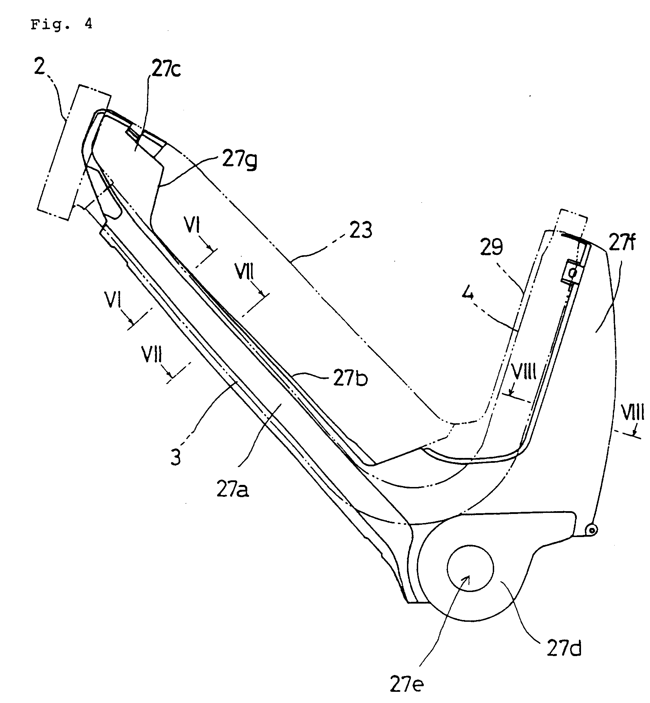

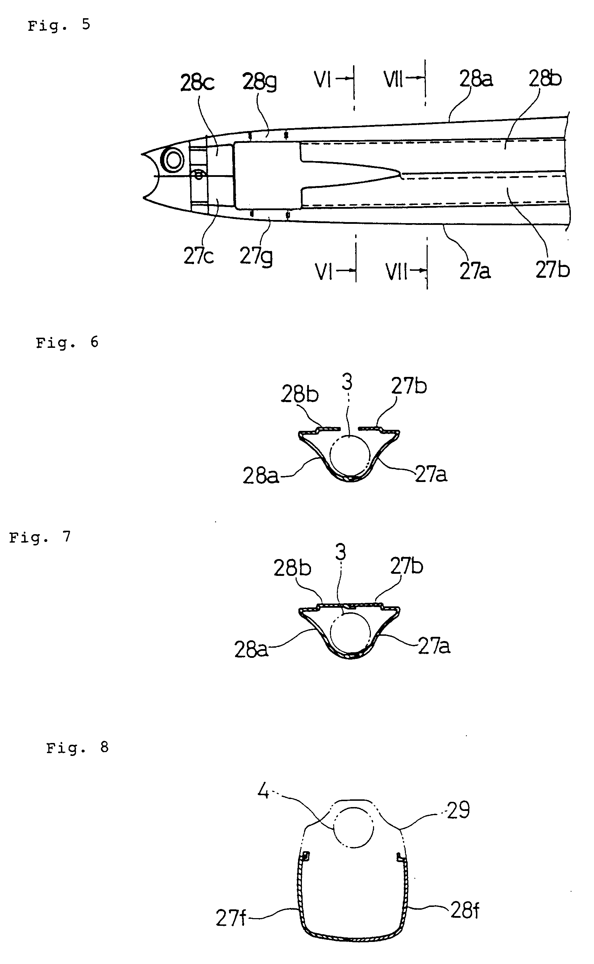

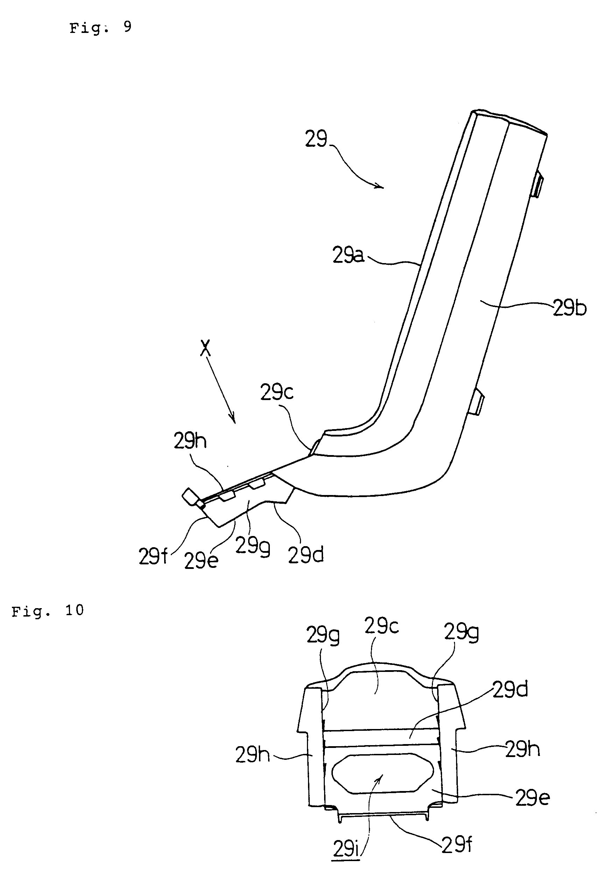

A preferred embodiment of the present invention will now be described with reference to Figs. 2 to 22.

Fig. 2 is a general side view of a motor-assisted bicycle 1 according to the preferred embodiment.

The motor-assisted bicycle 1 includes a head pipe 2, a down tube 3 extending rearward and downward from the head pipe 2, and a seat tube 4 extending rearward and upward from the lower end of the down tube 3 to a seat 5. Thus, the down tube 3 and the seat tube 4 constitute a V-shaped main frame bent at the lower end of the down tube 3.

A steering shaft 6 is pivotably supported to the head pipe 2, and a bar-shaped handle 7 is fixedly supported to the upper end of the steering shaft 6. A front fork 8 extends integrally from the lower end of the steering shaft 6, and a front wheel 9 is rotatably supported to the right and left lower ends of the front fork 8.

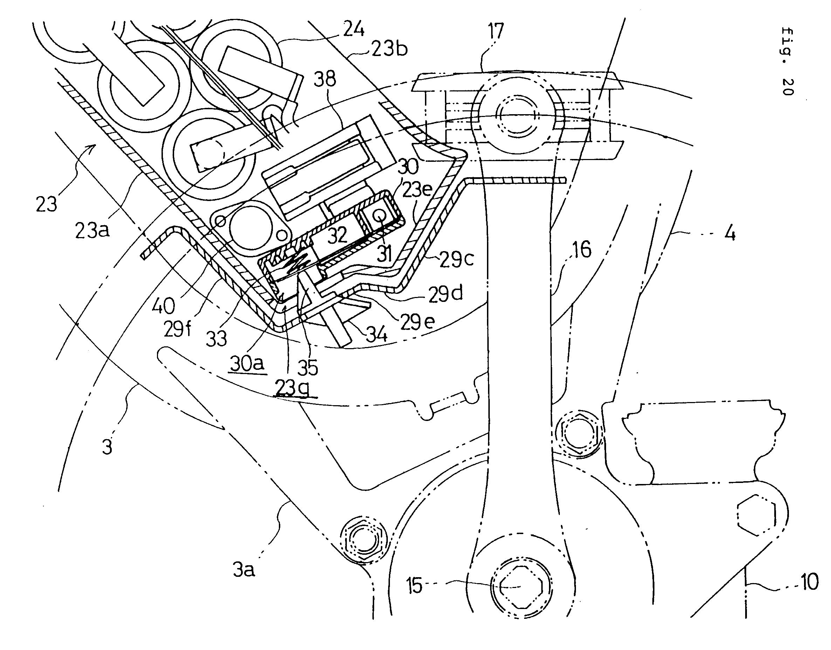

A bracket 3a projects downward from a V-shaped lower end portion of the main frame as the intersection between the down tube 3 and the seat tube 4, and a gear box 10 storing a gear mechanism is suspendedly fixed to the bracket 3a (see Fig. 20). A rear fork 11 is fixed at its front end to the gear box 10 and extends rearward. The rear fork 11 is reinforced by a pair of right and left stays 12 extending between the right and left ends of the rear fork 11 and the seat tube 4. A rear wheel 13 is rotatably supported to the right and left rear ends of the rear fork 11.

The gear box 10 serves also as a crankcase to rotatably support a crankshaft 15. A pair of right and left crank arms 16 are fixed at their base ends to the opposite ends of the crankshaft 15, and a pair of right and left pedals 17 are provided at the outer ends of the pair of crank arms 16.

A chain 20 is wrapped around a drive sprocket 18 to be rotated by rotation of the crankshaft 15 and a driven sprocket 19 mounted on an axle of the rear wheel 13. When the crankshaft 15 is rotated by a depression force applied to the pedals 17, the rear wheel 13 is rotated through the drive sprocket 18, the chain 20, and the driven sprocket 19, thereby allowing the motor-assisted bicycle 1 to be traveled as a usual bicycle.

A motor 21 is fixed to the gear box 10 so as to be disposed along the seat tube 4. A driving force of the motor 21 is reduced in speed through the gear mechanism and then transmitted to the crankshaft 15, thereby assisting man power.

A control device 22 including an electronic control unit and a motor driver for controlling the operation of the motor 21 is mounted on the rear surface of the seat tube 4 at a position over the motor 21.

The down tube 3 and the seat tube 4 are covered with V-shaped, separated left and right side covers 27 and 28 and a center cover 29. An elongated battery case 23 is detachably mounted on the inclined upper surfaces of the side covers 27 and 28 at their front portions covering the down tube 3, and the battery case 23 itself forms a part of an outer surface of a vehicle body.

A bicycle traveling battery 24 consisting of a plurality of Ni-Cd cells for supplying electric power to the motor 21 is stored in the battery case 23.

A combination switch 25 is provided at a position before the battery case 23. The combination switch 25 serves also to drive a lock device 26 for locking the battery case 23 in its mounted condition.

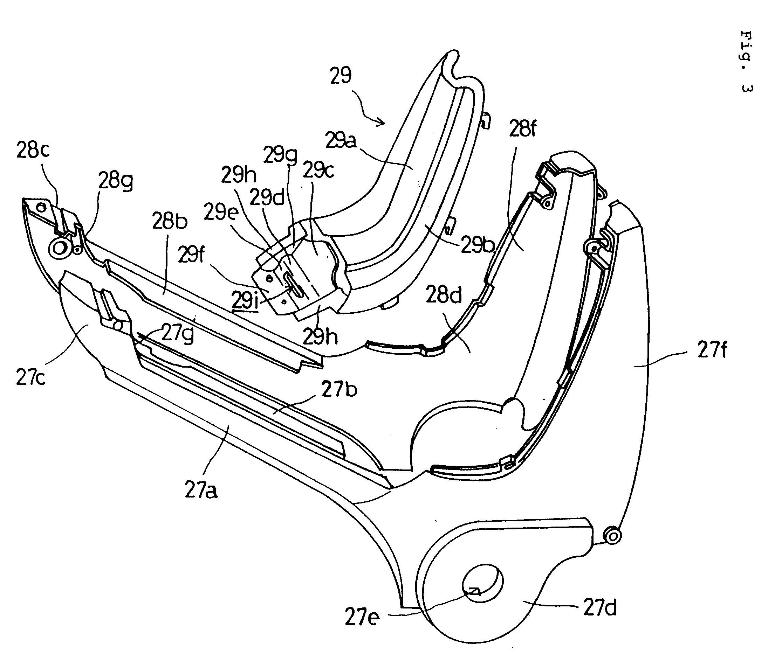

The details of the side covers 27 and 28 and the center cover 29 in the motor-assisted bicycle 1 described above will now be described with reference to Figs. 3 to 10.

Each of the side covers 27 and 28 has a V-shape as viewed in side elevation, and they are substantially symmetrical with each other in the lateral direction of the vehicle. The front half portions of the side covers 27 and 28 include elongated side wall portions 27a and 28a covering the lower surface and both side surfaces of the down tube 3, elongated flat upper walls 27b and 28b covering the upper surface of the down tube 3, and front end portions 27c and 28c projecting upward from the side wall portions 27a and 28a so as to surround the rear surface of the head pipe 2 and define a space for locating the combination switch 25 and the lock device 26 behind the head pipe 2.

The upper walls 27b and 28b are cut away at their front ends to define a space between them and the front end portions 27c and 28c. On the left and right sides of this space, there are formed inclined walls 27g and 28g so as to connect the side wall portions 27a and 28a with the front end portions 27c and 28c.

The V-shaped lowermost portions of the side covers 27 and 28 include central side wall portions 27d and 28d covering both side surfaces of the gear box 10, and the left-handed central side wall portion 27d has a circular hole 27e through which the crankshaft 15 is inserted.

The rear portions of the side covers 27 and 28 are formed as rear wall portions 27f and 28f so curved as to cover the rear surface of the seat tube 4 and define a space between them and the seat tube 4 for locating the motor 21 and the control device 22.

As shown in Figs. 3, 9, and 10, the center cover 29 covering the front surface of the seat tube 4 has a J-shape as viewed in side elevation so as to be vertically elongated and bent at the lower end portion. The laterally central portion of the center cover 29 is formed as a frontward projecting portion 29a extending along the seat tube 4, and left and right side walls 29b are formed so as to curvedly extend rearward from the opposite sides of the central projecting portion 29a. The rear edges of the left and right side walls 29b are fitted with the front edges of the rear wall portions 27f and 28f of the left and right side covers 27 and 28.

The front or lower end of the J-shaped center cover 29 is downward extended to form a four-step inclined surface consisting of four bottom walls 29c, 29d, 29e, and 29f. Further, a pair of opposed vertical side walls 29g are formed at the left and right ends of the bottom walls 29c, 29d, 29e, and 29f. Thus, a recess having a given shape is formed by the bottom walls 29c, 29d, 29e, and 29f and the vertical side walls 29g.

The upper edges of the vertical side walls 29g are bent outward to form a pair of left and right flanges 29h.

The bottom wall 29c forms a steep downward inclined surface having a given angle of inclination, and continues frontward through a substantially horizontal bottom wall 29d to the bottom wall 29e. The bottom wall 29e forms a gentle downward inclined surface, and it has a central large opening 29i. The bottom wall 29e continues frontward to the bottom wall 29f inclined upward.

When the left and right side covers 27 and 28 are assembled together with the main frame interposed therebetween, the front half portions of the side covers 27 and 28 cover the down tube 3 in such a manner that the flat upper walls 27b and 28b extend along the down tube 3 to form an inclined surface, and the rear wall portions 27f and 28f cover the rear surface of the seat tube 4 with a given space defined therebetween.

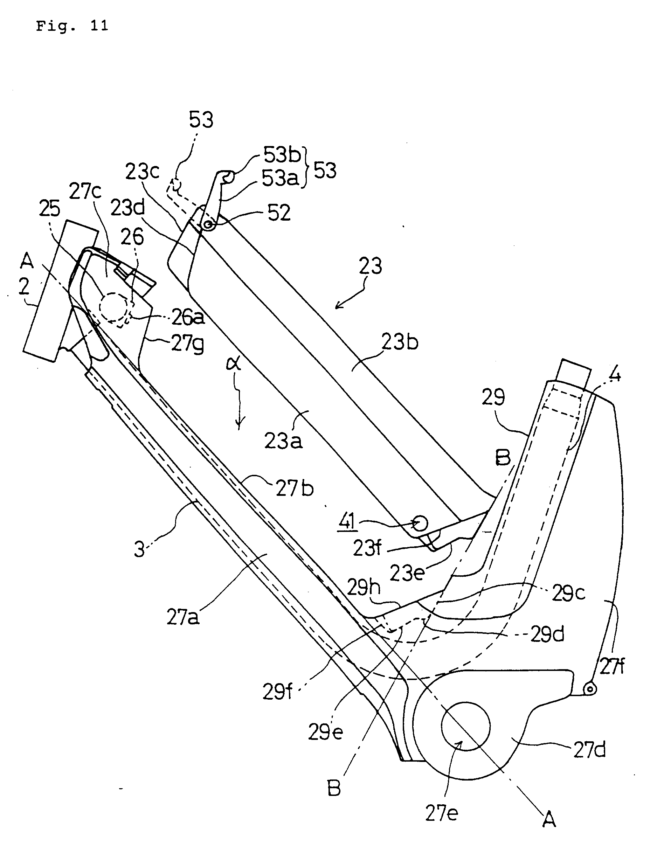

Thereafter, the center cover 29 is placed so as to cover the front surface of the seat tube 4 in such a manner that the left and right side walls 29b of the center cover 29 are continuously joined to the rear wall portions 27f and 28f of the left and right side covers 27 and 28. In this condition, as shown in Fig. 11, the front end portions 27c and 28c continuing to the side wall portions 27a and 28a project upward; the elongated flat upper walls 27b and 28b are inclined downward; and the flanges 29h of the center cover 29 are inclined upward with the bottom walls 29c, 29d, 29e, and 29f forming a given recess; whereby there is defined a substantially U-shaped recess α having an elongated bottom surface as viewed in side elevation, for receiving and supporting the battery case 23.

In particular, as shown in Fig. 11, there is defined an acute angle near a right angle between an inclined surface B-B formed by the upper bottom wall 29c of the four bottom walls 29c, 29d, 29e, and 29f supporting the rear end of the battery case 23 and an inclined surface A-A formed by the elongated flat upper walls 27b and 28b. That is, the inclined surface B-B is steeply inclined to come near a perpendicular surface.

The battery case 23 is configured in the form of elongated box having a substantially quadrangular cross section, and it is composed of a lower body 23a for storing the battery 24 and an upper lid 23b removably mounted on the lower body 23a.

The front end portion of the battery case 23 includes a central front wall 23c somewhat projecting frontward from left and right front walls 23d. Similarly, the rear end portion of the battery case 23 includes a central rear wall 23e somewhat projecting rearward from left and right rear walls 23f.

The left and right front walls 23d are formed as inclined surfaces corresponding to the front inside surface of the U-shaped recess α (i.e., the inclined walls 27g and 28g) defined by the side covers 27 and 28 and the center cover 29. Similarly, the left and right rear walls 23f are formed as inclined surfaces corresponding to the rear inside surface of the U-shaped recess α (i.e., the flanges 29h). Further, the central rear wall 23e is formed as a stepped inclined surface having the same shape as that of the stepped inclined surface formed by the bottom walls 29c, 29d, and 29e of the center cover 29.

The bottom wall 29f of the center cover 29 at its front lower end is parallel to the lower surface of the battery case 23.

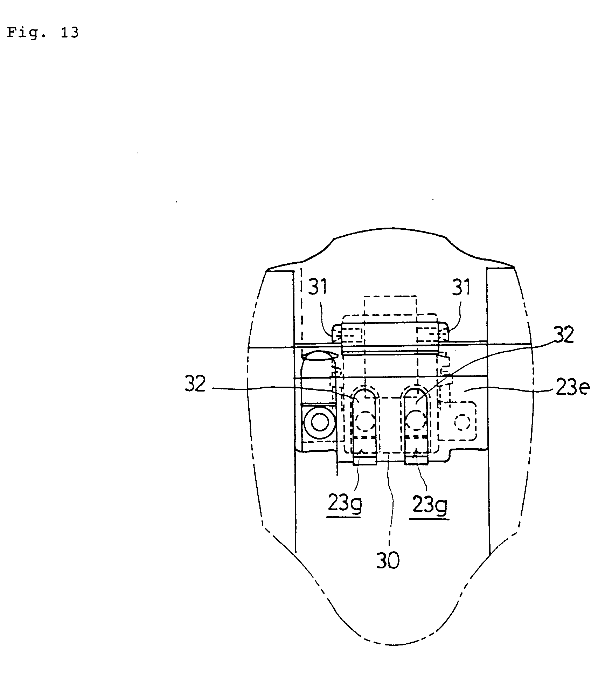

As shown in Fig. 13, a pair of elongated holes 23g are formed through a portion of the central rear wall 23e of the battery case 23 corresponding to the bottom wall 29e of the center cover 29.

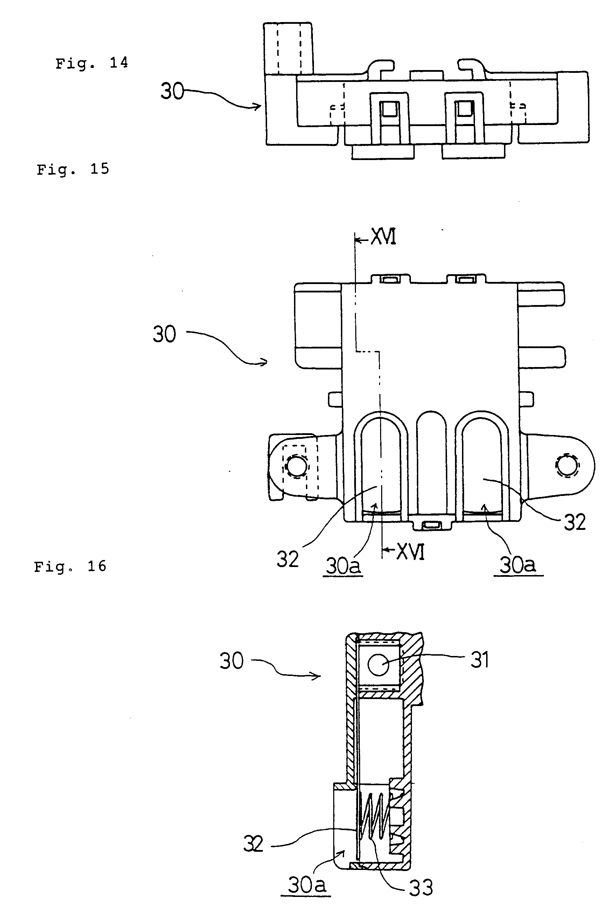

A discharging connector 30 is fixed to the inside surface of the central rear wall 23e of the battery case 23. As shown in Figs. 14 to 16, the discharging connector 30 is provided with a pair of left and right terminal plates 32 fixed at their upper ends by means of screws 31. Each terminal plate 32 is formed from a copper alloy plate and has elasticity. A spring 33 is provided so as to rearward bias the lower portion of each terminal plate 32. A pair of openings 30a are formed at the lower portion of the discharging connector 30 at positions behind the lower portions of the terminal plates 32, respectively. The pair of openings 30a correspond to the pair of elongated holes 23g of the central rear wall 23e of the battery case 23, respectively (see Fig. 13).

Accordingly, the pair of terminal plates 32 are exposed to the pair of elongated holes 23g of the central rear wall 23e of the battery case 23, respectively.

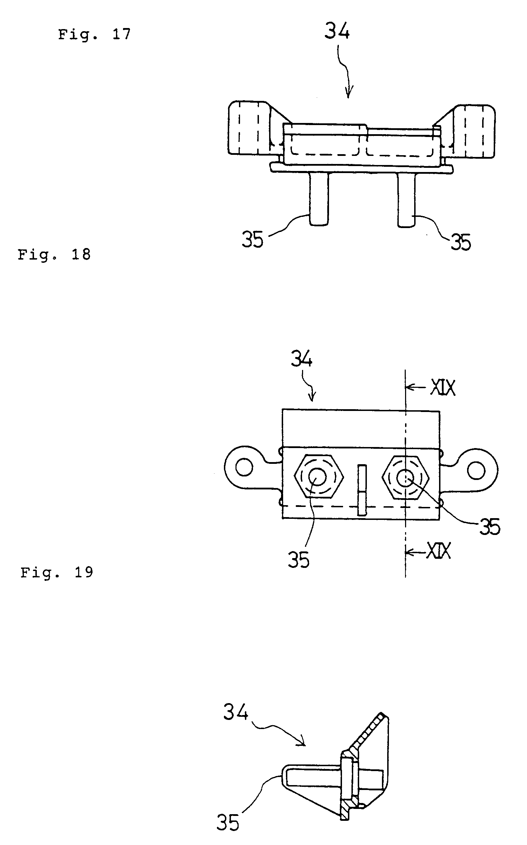

A connector 34 is mounted through the opening 29i of the bottom wall 29e of the center cover 29. As shown in Figs. 17 to 19, the connector 34 has a pair of left and right terminal rods 35 projecting frontward. The pair of terminal rods 35 of the connector 34 are opposed to the pair of terminal plates 32 of the discharging connector 30 mounted inside the battery case 23, respectively.

Accordingly, when the central rear wall 23e of the battery case 23 is fitted with the recess formed at the lower end portion of the center cover 29, the pair of terminal rods 35 of the connector 34 pass through the elongated holes 23g and the openings 30a, and press the pair of terminal plates 32 against the springs 33, thereby effecting the electrical connection between the discharging connector 30 and the connector 34.

A pair of plus and minus power line cords 36 and 37 extending from the battery 24 are connected at their outer ends to the screws 31 fixing the upper ends of the terminal plates 32 of the discharging connector 30.

Further, a fuse 38 is detachably connected and supported to the discharging connector 30.

A charging connector 40 is fixed to the left inside surface of the battery case 23 at its lower portion just inside the left rear wall 23f in such a manner that a connecting portion of the charging connector 40 is directed to the left side. A circular hole 41 is formed through the left lower portion of the battery case 23 at a position opposed to the connecting portion of the charging connector 40.

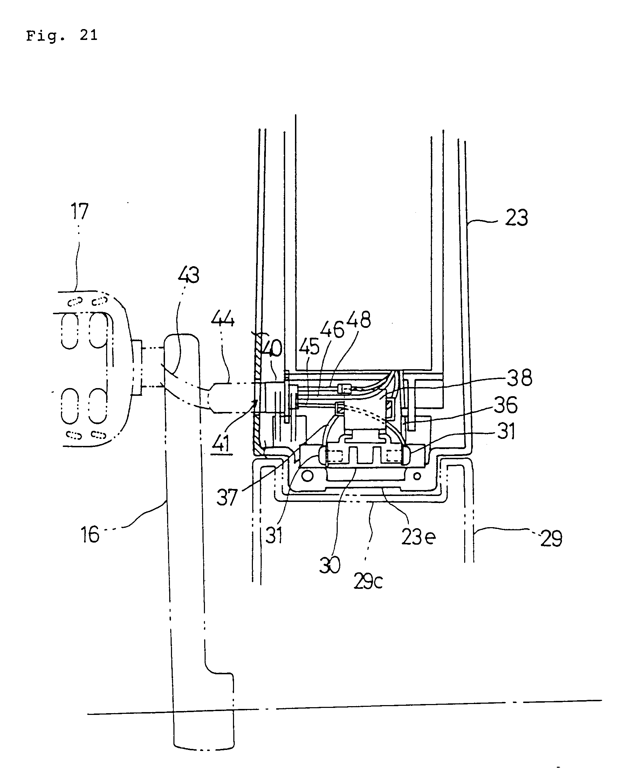

Accordingly, a plug 44 provided at one end of a charging connector cable 43 extending from a charger (not shown) is adapted to be inserted from the circular hole 41 of the battery case 23 and be connected to the connecting portion of the charging connector 40, thus allowing the battery 24 to be charged in the condition where the battery case 23 is mounted in the vehicle body (see Fig. 21).

Connected to the charging connector 40 are a pair of plus and minus power line cords 45 and 46 extending from the battery 24 and a signal line cord 48 for outputting a temperature detection signal from a thermistor provided inside the battery case 23.

Accordingly, the charging connector cable 43 also has a pair of plus and minus power lines and a temperature signal line, and the charger includes a temperature control circuit for performing control such that if the temperature inside the battery case 23 becomes a given temperature or higher, the charging operation is inhibited.

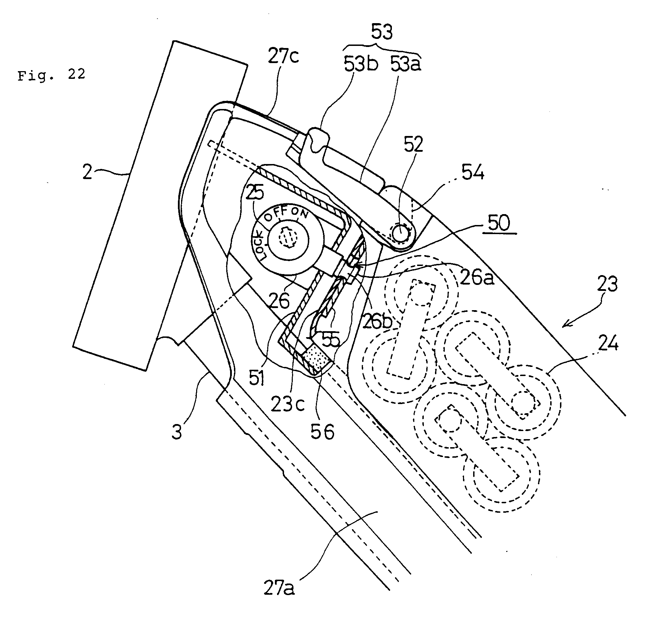

As shown in Fig. 22, a plate 55 forming a part of a support bracket for a grip 53 to be hereinafter described is attached to the inside surface of the central front wall 23c at the front end portion of the battery case 23. A somewhat vertically elongated elliptical lock hole 50 is formed through the central front wall 23c and the plate 55. On the other hand, a support bracket 51 is provided inside the front end portions 27c and 28c of the left and right side covers 27 and 28, and the lock device 26 is fixed to the support bracket 51. The lock device 26 has a lock pin 26a retractably projecting rearward and adapted to be inserted through the lock hole 50 of the central front wall 23c and the plate 55 of the battery case 23. When the lock pin 26a of the lock device 26 is inserted through the lock hole 50, the front end portion of the battery case 23 can be locked by the lock pin 26a.

The lower end of the support bracket 51 for supporting the lock device 26 is bent rearward to extend to a position for receiving the lower surface of the front end portion of the battery case 23. A rubber cushion 56 is fixed to the upper surface of the rear bent portion of the support bracket 51. Accordingly, the battery case 23 is mounted in such a manner that the lower surface of the front end portion of the battery case 23 presses the rubber cushion 56.

Further, a circumferential groove 26b is formed on the lock pin 26a in the vicinity of the rear end thereof. After the lock pin 26a is inserted through the lock hole 50, a lower part of the inner circumferential edge of the lock hole 50 is adapted to engage the circumferential groove 26b of the lock pin 26a.

More specifically, in mounting the battery case 23, the front end portion of the battery case 23 received at a given position of the body cover is slightly depressed to elastically deform the rubber cushion 56. In this condition, the lock device 26 is operated by a key to insert the lock pin 26a through the lock hole 50 of the battery case 23. Thereafter, when a depression force applied to the battery case 23 is removed, the lower circumferential edge portion of the lock hole 50 comes into engagement with the circumferential groove 26b of the lock pin 26a by an elastic force of the rubber cushion 56. Thus, a perfect locked condition of the battery case 23 is obtained to prevent rattling of the battery case 23.

Accordingly, the locked condition of the battery case 23 cannot be canceled only by the key operation of the lock device 26 because the lower circumferential edge portion of the lock hole 50 is engaged with the circumferential groove 26b of the lock pin 26a. That is, the locked condition of the battery case 23 can be canceled by first depressing the front portion of the battery case 23 to thereby disengage the circumferential groove 26b of the lock pin 26a from the lower circumferential edge portion of the lock hole 50, and then operating the key under the depressed condition of the battery case 23 to retract the lock pin 26a from the lock hole 50.

The lock device 26 is driven by the combination switch 25 provided on the right side of the lock device 26. The key is adapted to be inserted into a key insert hole opening to the right of the combination switch 25, then allowing a main switch to be turned on and off and also allowing the locking and unlocking operation of the lock device 26.

More specifically, as shown in Fig. 22, the combination switch 25 has three key operating positions of ON, OFF, and LOCK. The ON position is a position where power assisting to the bicycle is to be performed. In the ON position, the lock pin 26a is projected to keep the locked condition of the battery case 23. The OFF position is a position where power assisting to the bicycle is not to be performed. Also in the OFF position, the lock pin 26a is projected to keep the locked condition of the battery case 23. The LOCK position is a position where the unlocking operation of the lock device 26 is to be performed. In the LOCK position, the lock pin 26a is retracted to unlock the battery case 23, and power assisting is not performed, naturally.

Accordingly, only in mounting or removing the battery case 23, the key is operated to set the LOCK position. Usually, the OFF position or the ON position is selected to keep the locked condition of the battery case 23. In requiring power assisting to the bicycle, the ON position is selected, whereas in traveling the bicycle without the power assisting as similar to a usual bicycle or keeping the bicycle stationary, for example, the OFF position is selected.

A grip 53 is vertically pivotably supported to a pin 52 provided at the front upper end portion of the battery case 23.

The grip 53 is composed of left and right arms 53a pivotably supported at their rear ends to the pin 52 and a connecting bar 53b connecting the front ends of the left and right arms 53a. The grip 53 is normally biased to its lowered position by a torsion spring 54.

Accordingly, the grip 53 can be raised against a biasing force of the torsion spring 54 by gripping the connecting bar 53b and then pulling it up, thus facilitating the removal of the battery case 23. In the normal mounted condition of the battery case 23, the grip 53 is kept in its lowered position by the torsion spring 54.

In mounting the battery case 23 on the body cover consisting of the side covers 27 and 28 and the center cover 29, the lower surface of the battery case 23 is set in parallel to the inclined surface A-A formed by the elongated flat upper walls 27b and 28b of the side covers 27 and 28 as shown in Fig. 11. Then, the central rear wall 23e of the battery case 23 is fitted to the inclined surface B-B formed by the upper bottom wall 29c of the center cover 29, and the battery case 23 is moved down along the inclined surface B-B with the above parallel condition being maintained. In this manner, the battery case 23 can be engaged with the body cover.

Alternatively, the battery case 23 may be engaged with the body cover by first fitting the rear portion of the battery case 23 to the lower portion of the center cover 29 and then pivotally lowering the front portion of the battery case 23.

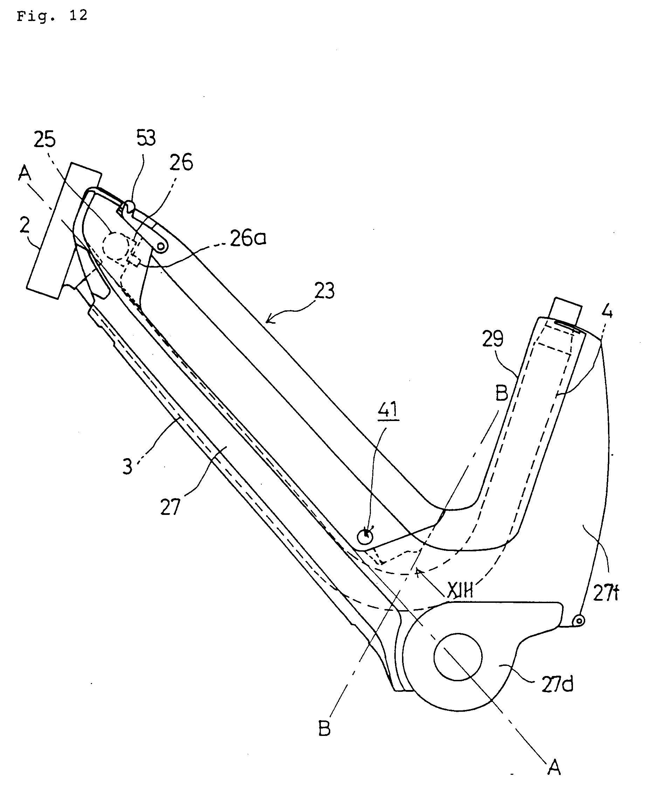

In any manner, the central rear wall 23e of the battery case 23 is guided and received by the recess formed by the bottom walls 29c, 29d, 29e, and 29f and the left and right vertical side walls 29g of the center cover 29, thereby positioning the central rear wall 23e in the longitudinal and lateral directions of the vehicle body. Furthermore, the central front wall 23c of the battery case 23 is received between the left and right inclined walls 27g and 28g of the front end portions 27c and 28c of the side covers 27 and 28. Furthermore, the lower surface of the battery case 23 abuts against the upper walls 27b and 28b of the side covers 27 and 28; the left and right front walls 23d of the battery case 23 abut against the left and right inclined walls 27g and 28g of the side covers 27 and 28; and the left and right rear walls 23f of the battery case 23 abut against the left and right flanges 29h of the center cover 29. Thus, the battery case 23 is supported to the body cover as shown in Fig. 12.

The battery case 23 comes into engagement with the body cover in such a manner that the rear portion of the battery case 23 is guided and positioned by the recess formed at the lower portion of the center cover 29. Accordingly, the pair of terminal rods 35 of the connector 34 mounted on the bottom wall 29e forming the recess is brought into secure contact with the pair of terminal plates 32 of the discharging connector 30 mounted in the battery case 23, thus effecting a reliable electrical connection between the connectors 34 and 30.

In this manner, the electrical connection is made simultaneously with the mounting of the battery case 23. Accordingly, the electrical connection can be completed without the need of paying attention to positioning of the connecting portion of the connector 30.

As described above, when the front portion of the battery case 23 is slightly depressed and the key is inserted into the key insertion hole of the combination switch 25 to perform the locking operation (the key operation from the LOCK position to the OFF position), the lock pin 26a is projected to enter the lock hole 50 of the central front wall 23c of the battery case 23. Thereafter, when the depression force applied to the front portion of the battery case 23 is removed, the lower circumferential edge portion of the lock hole 50 comes into engagement with the circumferential groove 26b of the lock pin 26a by the elastic force of the rubber cushion 56 to obtain the locked condition of the battery case 23 with possible rattling prevented.

In the locked condition of the battery case 23 obtained by the insertion of the lock pin 26a into the lock hole 50 as shown in Fig. 12, it is needless to say that the front portion of the battery case 23 cannot be pulled upward, and it is to be noted that the rear portion of the battery case 23 cannot also be pulled upward.

More specifically, the upward pulling of the rear portion of the battery case 23 means upward pivotal movement of the battery case 23 about the engaging portion between the lock pin 26a and the lock hole 50. However, since the inclined surface B-B formed by the bottom wall 29c of the center cover 29 is a steep inclined surface near a perpendicular surface, the central rear wall 23e of the battery case 23 to be pivoted about the engaging portion of the lock pin 26a comes into abutment against the bottom wall 29c of the center cover 29 to inhibit the pivotal movement of the battery case 23. Therefore, the rear portion of the battery case 23 cannot be pulled upward in the locked condition of the battery case 23.

Thus, the locked condition of the battery case 23 obtained by engaging the lock pin 26a of the lock device 26 with the lock hole 50 of the battery case 23 to inhibit the removal of the battery case 23 can be made perfect, and the locking operation can be simply performed.

In removing the battery case 23 in the unlocked condition thereof, the front portion of the battery case 23 is slightly depressed, and the key is operated in the above depressed condition of the battery case 23 to retract the lock pin 26a of the lock device 26 from the lock hole 50 of the central front wall 23c of the battery case 23. Thereafter, the grip 53 is raised to pull up the front portion of the battery case 23 by gripping the connecting bar 53b of the grip 53. Thus, the battery case 23 can be simply removed after unlocking the battery case 23.

As described above, the body cover in this preferred embodiment is composed of the three parts, that is, the left and right side covers 27 and 28 and the center cover 29. With such a small number of parts, the body cover can be easily assembled. Furthermore, as the recess for fittedly supporting the rear portion of the battery case 23 is formed at the lower portion of the center cover 29, the battery case 23 can be securely supported with a simple structure of the body cover. In addition, as the recess formed at the lower portion of the center cover 29 serves as a guide in mounting the battery case 23, the mounting or removing operation of the battery case 23 can be greatly easily performed, and the electrical connection of the battery 24 in the battery case 23 to the vehicle body side can be reliably made.

### Effect of the Invention.

According to the present invention, the lower surface of the battery case is supported by the side covers, and the rear end portion of the battery case is fittedly supported by the recess formed at the lower portion of the center cover. Accordingly, the battery case can be securely supported by the body cover with a simple structure, and the body cover can be easily assembled because of a small number of parts. Furthermore, the battery case can be simply attached to and detached from the body cover.

The electrical connection terminals on the vehicle body side to be connected to the battery stored in the battery case are located at the recess formed at the lower portion of the center cover. That is, the electrical connection terminals are located at the recess where the rear portion of the battery case is guided and positioned in mounting the battery case. Accordingly, the electrical connection between the battery case side and the vehicle body side can be always reliably obtained without the need of paying attention to positioning of the electrical connecting portion of the battery case.

The side covers are formed as a pair of substantially symmetrical left and right side covers each having a V-shape extending along the main frame in such a manner that the rear half portion of each side cover covers the rear surface of the seat tube. With this structure, the body cover for supporting the battery case can be constructed by the three parts, i.e., the two side covers and the center cover. Thus, the body cover can be made simple in structure and can be simply assembled.

Summarized the present invention provides a body cover structure in a motor-assisted bicycle which is small in number of parts and simple to support a battery case and can facilitate attaching and detaching of the battery case.

In a motor-assisted bicycle having a battery and a motor to be driven by electric power of the battery and generate motive power assisting man power, the motor-assisted bicycle having a V-shaped main frame comprising a down tube 3 extending rearward and downward from a head pipe 2 and a seat tube 4 extending rearward and upward from a lower end of the down tube 3 toward a seat; a body cover structure comprising side covers 27 and 28 for surrounding the down tube 3, the side covers 27 and 28 having inclined upper surfaces 27b and 28b for supporting a lower surface of an elongated battery case 23; and a center cover 29 for covering a front surface of the seat tube 4, the center cover 29 having a lower portion formed with a recess defined by bottom walls 29c, 29d, 29e, and 29f and opposed side walls 29g formed at right and left side edges of the bottom walls; wherein a rear portion of the battery case 23 is fittedly supported by the recess.

## Claims

1. Motor-assisted bicycle comprising a battery and a motor to be driven by electric power of said battery and generate motive power assisting man power, said motor-assisted bicycle having a V-shaped main frame comprising a down tube (3) extending rearward and downward from a head pipe (2) and a seat tube (4) extending rearward and upward from a lower end of said down tube (3) toward a seat (5); a body cover structure having:
side covers (27, 28) for surrounding said down tube (3) and a center cover (29) for covering a front surface of said seat tube (4), characterized in that, said side covers (27, 28) having inclined upper surfaces (27b, 28b) for supporting a lower surface of an elongated battery case (23); and
said center cover (29) having a lower portion formed with a recess defined by bottom walls (29c, 29d, 29e, 29f) and opposed side walls (29g) formed at right and left side edges of said bottom walls (29c, 29d, 29e, 29f);
wherein a rear portion of said battery case (23) is fittedly supported by said recess.

2. Motor-assisted bicycle according to claim 1, wherein electrical connection terminals on a vehicle body side to be connected to said battery (24) stored in said battery case (23) are located at said recess formed at said lower portion of said center cover (29).

3. Motor-assisted bicycle according to claim 1 or 2, wherein said side covers (27, 28) are formed as a pair of substantially symmetrical left (27) and right (28) side covers each having a V-shape extending along said main frame in such a manner that a rear half portion of each side cover (27, 28) covers a rear surface of said seat tube (4).

## Patentansprüche

1. Fahrrad mit Hilfsmotor, das eine Batterie und einen Motor aufweist, der durch elektrische Energie der Batterie anzutreiben ist und der zum Erzeugen von Muskelkraft unterstützender Antriebskraft dient,
wobei das Fahrrad mit Hilfsmotor einen V-förmigen Hauptrahmen aufweist, der ein von einem Kopfrohr (2) nach hinten und unten verlaufendes Schrägrohr (3) sowie ein von einem Unterende des Schrägrohrs (3) zu einem Sitz (5) nach hinten und oben verlaufendes Sitzrohr (4) aufweist,
wobei eine Rumpfabdeckungsstruktur Seitenabdeckungen (27, 28) zum Umschließen des Schrägrohrs (3) sowie eine Mittelabdeckung (29) zum Abdecken einer Vorderfläche des Sitzrohrs (4) aufweist, dadurch gekennzeichnet,
daß die Seitenabdeckungen (27, 28) geneigte Oberflächen (27b, 28b) zum Halten einer unteren Fläche eines langgestreckten Batteriegehäuses (23) aufweisen;
wobei die Mittelabdeckung (29) einen unteren Abschnitt aufweist, der mit einer Vertiefung ausgebildet ist, die durch Bodenwände (29c, 29d, 29e, 29f) und an rechten und linken Seitenrändern der Bodenwände (29c, 29d, 29e, 29f) gebildete gegenüberliegende Seitenwände (29g) begrenzt ist;
wobei ein hinterer Abschnitt des Batteriegehäuses (23) von der Vertiefung passend gehalten wird.

2. Fahrrad mit Hilfsmotor nach Anspruch 1, in dem elektrische Verbindungsanschlüsse an einer Fahrzeugrumpfseite zum Anschluß an die in dem Batteriegehäuse (23) aufgenommene Batterie (24) an der Vertiefung angeordnet sind, die an dem unteren Abschnitt der Mittelabdeckung (29) ausgebildet ist.

3. Fahrrad mit Hilfsmotor nach Anspruch 1 oder 2, in dem die Seitenabdeckungen (27, 28) als ein Paar im wesentlichen symmetrischer linker (27) und rechter (28) Seitenabdeckungen ausgebildet sind, die jeweils eine V-Form haben, die entlang dem Hauptrahmen derart verläuft, daß ein hinterer Halbabschnitt jeder Seitenabdeckung (27, 28) eine Rückfläche des Sitzrohrs abdeckt.

## Revendications

1. Bicyclette avec moteur auxiliaire, comprenant une batterie et un moteur pouvant être entraîné par la puissance électrique de ladite batterie et engendrer une force motrice aidant la force de l'homme, ladite bicyclette avec moteur auxiliaire ayant un cadre principal en forme de V comprenant un tube inférieur (3) s'étendant vers l'arrière et vers le bas depuis un tube de direction (2) et un tube de selle (4) s'étendant vers l'arrière et vers le haut depuis une extrémité inférieure dudit tube inférieur (3) jusqu'à une selle (5) ; un carénage ayant
des couvercles latéraux (27, 28) pour entourer ledit tube inférieur (3) et un couvercle central (29) pour couvrir une surface avant dudit tube de selle (4), caractérisée en ce que lesdits couvercles latéraux (27, 28) ont des surfaces supérieures inclinées (27b, 28b) pour supporter une surface inférieure d'un boîtier de batterie allongé (23), et ledit couvercle central (29) a une partie inférieure formée avec une cavité définie par des parois inférieures (29c, 29d, 29e, 29f) et des parois latérales opposées (29g) formées au niveau des bords latéraux droit et gauche desdites parois inférieures (29c, 29d, 29e, 29f) ;
une partie arrière dudit boîtier de batterie (23) étant supportée de façon ajustée par ladite cavité.

2. Bicyclette avec moteur auxiliaire selon la revendication 1, dans laquelle des bornes de jonction électrique sur un côté corps de véhicule devant être raccordées à ladite batterie (24) placée dans ledit boîtier de batterie (23) sont situées au niveau de ladite cavité formée dans ladite partie inférieure dudit couvercle central (29).

3. Bicyclette avec moteur auxiliaire selon la revendication 1 ou 2, dans laquelle lesdits couvercles latéraux (27, 28) sont formés comme une paire de couvercles latéraux gauche (27) et droit (28) sensiblement symétriques, ayant chacune une forme en V s'étendant le long dudit cadre principal de telle manière qu'une demi-partie arrière de chaque couvercle latéral (27, 28) couvre une surface arrière dudit tube de selle (4).
